(19) **Europäisches Patentamt / European Patent Office / Office européen des brevets**

(11) **EP 1 494 174 B1**

(12) **EUROPEAN PATENT SPECIFICATION**

(45) Date of publication and mention of the grant of the patent:
**07.11.2018 Bulletin 2018/45**

(51) Int Cl.:
***G06T 15/00*** *(2011.01)*

(21) Application number: **04102738.4**

(22) Date of filing: **16.06.2004**

(54) **Method of generating blur**

Erzeugung von Unschärfe

Procédé de géneration de flou

(84) Designated Contracting States:
**DE FR GB**

(30) Priority: **03.07.2003 FR 0308114**

(43) Date of publication of application:
**05.01.2005 Bulletin 2005/01**

(73) Proprietor: **Thomson Licensing**
**92130 Issy-les-Moulineaux (FR)**

(72) Inventors:
- **Blonde, Laurent**
  **35235, Thorigne-Fouillard (FR)**
- **Viellard, Thierry**
  **35410, Osse (FR)**

- **Sahuc, David**
  **35000, Rennes (FR)**

(74) Representative: **Vidon Brevets & Stratégie**
**16B, rue de Jouanet**
**BP 90333**
**35703 Rennes Cedex 7 (FR)**

(56) References cited:
**GB-A- 2 325 131     US-A- 5 986 659**

- **PRZEMYSLAW ROKITA: "FAST GENERATION OF DEPTH OF FIELD EFFECTS IN COMPUTER GRAPHICS" COMPUTERS AND GRAPHICS, PERGAMON PRESS LTD. OXFORD, GB, vol. 17, no. 5, 1 September 1993 (1993-09-01), pages 593-595, XP000546559 ISSN: 0097-8493**

**Description**

The invention relates to a computerized method and device, as defined in the appended claims, for generating distance blur effects in synthesis images. Applications are for example the creation of special effects for video games, film production.

In everyday life, distance blur is an important factor in realism, since we observe it continually during modification of the accommodation distance carried out by the eye: foregrounds or backgrounds become blurred. This distance blur effect or depth of field effect is usually forgotten in the generation of synthesis images for video games. This is due to the burden of calculation to be implemented, in the solutions conventionally used, to carry out such effects. Graham Alexander Thomas et al. (GB2325131A, "Improvements in artificial distance effect in image generation") exemplifies such a distance effect. The extent of blurring of a background pixel is modified in accordance with the extent of blurring of neighbouring foreground pixels.

The process most commonly used to generate distance blur is the generation of multiple synthesis images, with slightly different viewpoints characteristic of the distance blur that one wishes to generate. To obtain the result, these multiple images are averaged among themselves. This process simulates the multiplicity of optical paths created by a pupil of non zero size. The number of averaged images may vary for example from 10 to 100, this correspondingly multiplying the duration of calculation.

There also exist approximate processes using fog effects, but the quality of whose rendition is relatively poor, and which in particular do not correctly process the phenomena of masking by foregrounds. This technique has been used as a "trick" in numerous video games, since it makes it possible to use techniques for reducing geometrical complexity of the scene, for example by hiding defects by the blur/haze effect.

Another technique, known as "mip-mapping", consists in utilizing textures of various qualities for the same image which are used depending on the distance in the scene or depending on the blur to be simulated. The low-resolution images are used for the largest distances. They are also resampled, remagnified, thereby creating an interpolation having the appearance of blur, to depict blur on closer objects. This solution allows approximate rendition of blur phenomena, while retaining techniques of the polygon processing type.

These various solutions are either complex to implement, or of mediocre quality which decreases the realism of the scenes. The generation of blur at the boundary of objects, when overlaying objects, for example foreground or background objects, is not carried out realistically. The calculation time, for their implementation, is high, decreasing the performance of the system.

An aim of the invention is to alleviate the aforesaid drawbacks. A subject thereof is a method of generating blur in a 2D image representing a 3D scene, on the basis of its associated distance image assigning a depth to the pixels of the image, characterized in that it comprises the following steps:

- partitioning of the 2D image into 2D zones as a function of the depths assigned to the pixels, a zone being defined by a minimum and maximum depth,
- calculation of blur of a 2D zone by convolution for the pixels on either side of the boundary with another zone, the size of the convolution kernel being dependent on the depth of the pixels of the 2D zone processed.

According to a particular implementation, the 2D zones are processed sequentially from the furthest away to the closest, the calculation of blur of a 2D current zone being carried out on the boundaries of this zone with the zone previously processed, so as to provide an intermediate image, this intermediate image being that utilized for the convolution, during the processing of the next zone.

According to a particular implementation, the convolution for a pixel at the zone border belonging to the current zone takes into account the pixels belonging to the current zone and those belonging to the previous zone, the convolution for a pixel at the zone border belonging to the previous zone takes into account only the pixels belonging to the current zone.

In the latter case, for the calculation of blur, the value of a pixel in the previous zone may be obtained by adding the initial value of the pixel to the convolution result, in proportions corresponding to the surface area of the kernel in the previous zone in relation to the overall surface area of the kernel.

The invention also relates to a device for generating blur, characterized in that it comprises a graphics processor for generating a synthesis image and an associated depth map, a distance blur processor comprising means of calculation for defining 2D zones of the image corresponding to depth zones, the calculation of blur of a processed 2D zone being obtained by convolution for the pixels on either side of the boundary with another zone, the size of the convolution kernel being dependent on the depth of the pixels of the 2D zone processed.

The invention proposes a method of calculating distance blur, working on image data, that is to say on 2D data rather than 3D scene data, situated downstream of the image synthesis operation and being able to be "pipelined" with the latter. The calculations may thus be carried out by a processing unit in parallel with the synthesis operations.

The method renders distance blur effects accessible with high quality and at much lower calculation cost than the existing solutions.

Other features and advantages of the invention will become clearly apparent in the description given by way of nonlimiting example, and offered with regard to the appended figures which represent:

- Figure 1, a flowchart of the method according to the invention,
- Figure 2, the principle of generating distance blur,
- Figure 3, the definition of the optical parameters,
- Figure 4, an example of depth zones,
- Figure 5, an example of constructing masks,
- Figure 6, a device according to the invention.

The invention uses as a basis the result image from an image synthesis, intensity image, as well as the associated distance image, Z-image or Z-buffer which provides a distance or a depth for each pixel of the intensity image. The utilization of masks relating to depth zones for matching a given zone with the zones previously processed makes it possible to solve the problem of the masking of objects.

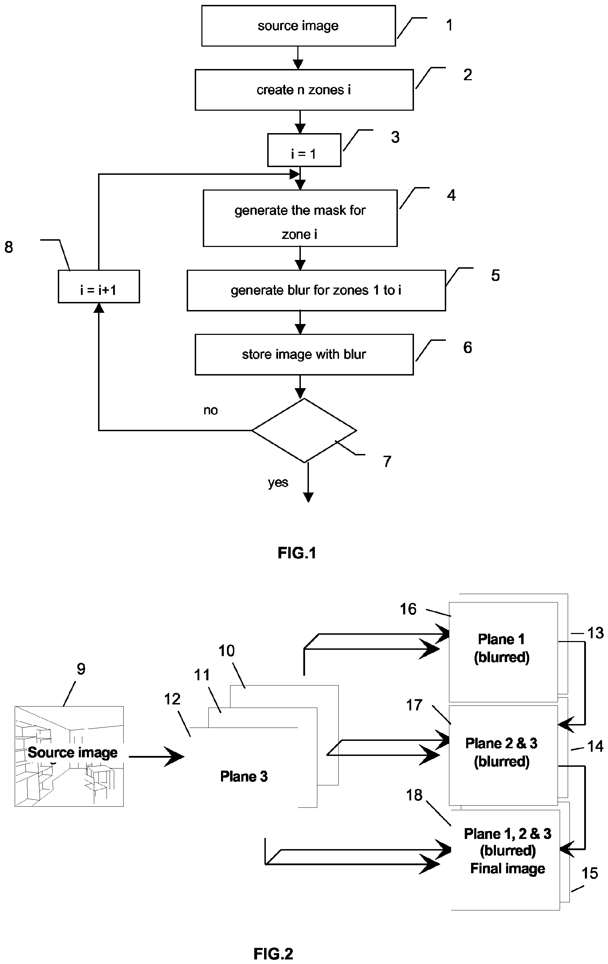

Figure 1 represents the distance blur processing algorithm. The source image which represents the scene to be processed is transmitted to step 1. Step 2 performs a partitioning of the scene into n depth zones indexed i. The third step 3 initializes the value i to 1 which corresponds to the zone furthest away. The fourth step referenced 4 generates, for zone i, a selection mask intended to determine the image regions affected by blur. The fifth step referenced 5 carries out the generation of blur for zone i on the basis of the image previously processed, that is to say in which blur has been generated, corresponding to the previous zone i = 1. This new image with blur is stored in step 6 to be taken into account in step 5 of the next iteration. The value of i is compared with n at step 7. If it is less, i is incremented in step 8 then steps 4 to 6 are carried out with the new value of i. If it is equal, the processing is terminated and the final image is that stored in the previous step 6.

Figure 2 symbolizes these various steps. The source image referenced 9 in the figure is the processed image. A partitioning of the scene represented in this source image is performed so as to provide depth zones also called planes, referenced 10, 11 and 12. A selection mask 13, 14, 15 is created for each of the zones. The processing is firstly performed on the background zone 10 to provide the mask 13. The image is processed on the basis of the mask 13 to provide, by convolution, for the part corresponding to the depth zone furthest away, a blur image 16. The image is processed on the basis of the mask 14 to provide, by convolution, for the part corresponding to the second depth zone, a blur image and is then combined with the blur image 16 to provide a more complete blur image 17. The image is also processed on the basis of the mask 15 to provide, by convolution, for the part corresponding to the nearest depth zone, a blur image and is then combined with the blur image 17 to provide the final image 18.

The solving of masking effects, an operation which is indispensable in order to limit artefacts, is very expensive: it is necessary to verify the masking for each point of each spot. To limit this drawback, the effect of the masking is considered to be zero for points close to one another, depthwise. On the other hand, it needs to be envisaged in zones of the image where there are strong variations in distance, the case of the contour of objects, since there is then a break in continuity along Z. A partitioning of the image into depth zones makes it possible to group the points together according to a distance proximity criterion. These zones correspond to a certain distance bracket with respect to the objective, the objects of the scene belonging to a zone then having similar blur. One and the same convolution mask will thus be usable for a zone.

A depth zone is therefore a set of points grouped together having a similar distance to the observer without taking account of the limits of the objects present in the scene. In the 2D domain, a 2D zone is therefore defined by the set of pixels whose associated depth lies in a bracket defining this depth zone. The edges of a 2D zone, also called the 2D zone contour, defined as the boundary of this set of pixels with the sets of pixels belonging to different depth zones, correspond to the sensitive region for the processing of masking effects while the interior of the 2D zone may be processed without particular consideration. As explained later on, a selection mask delimits, for a given zone, what should be considered as interior and what should be considered as edges of the zone.

The partitioning of the scene into depth zones may be done on the basis of the dimension of the blur spots for the pixels of the image. A preliminary calculation of the diameter of these spots, for a given optical configuration and observation distance, is therefore performed.

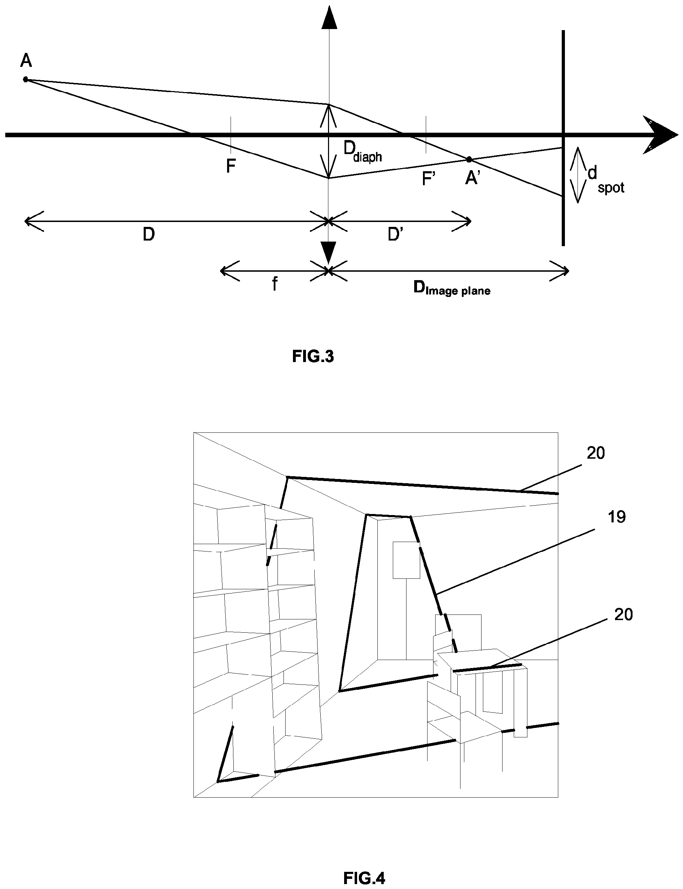

Figure 3 gives a definition of the various parameters of the optical system allowing the calculation of the diameter of the blur spots:

- f is the focal length of the optical system
- A is a source point, a distance D away from the optical system
- A' is the image of A through the optical system, a distance D' away from the system
- Dimage plane is the distance from the image plane (CCD, film etc.) to the optical system

- $D_{diaph}$ is the diameter of the diaphragm
- $d_{spot}$ is the diameter of the spot created by A situated on the image plane.
- I is the intensity of the source point A.

The observation plane not coinciding with the image plane passing through A', a spot of non zero diameter results therefrom.

This diameter is obtained on the basis of the following formulae:

$$\left\{ \begin{array}{l} \dfrac{1}{D} + \dfrac{1}{D'} = \dfrac{1}{f}\,(conjugation) \\[4mm] \dfrac{D'}{D_{diaph}} = \dfrac{D' - D_{image\ plane}}{d_{spot}}\,(Thales) \end{array} \right. \Leftrightarrow d_{spot} = D_{diaph}\left[ D_{image\ plane}\left( \dfrac{1}{f} - \dfrac{1}{D} \right) - 1 \right]$$

The diameter of a spot is therefore associated with an object plane distance D, the other parameters are fixed values depending on the optical system. This value D is obtained via the depth map or Z-buffer which associates a depth value with each pixel of the image. An item of information regarding blur or spot diameter may therefore be calculated for each pixel of the image.

The determination of the zones is performed as a function of the diameter of the spots. Two thresholds define, in terms of pixels, the maximum variation of the diameter of the spots within a depth zone. As a supplement, a minimum population threshold, in terms of number of pixels, avoids the creation of an empty zone or one containing only few points.

The edges of a 2D zone are recovered by this technique on account of the discontinuities in the Z direction at the level of the contours of objects. However, the contours of 2D zones, contours of sets of points equidistant, in a given bracket, to the observer, also pass elsewhere than on contours of objects.

Figure 4 represents the generation of three zones in an image, partitioning of the three-dimensional space by planes which are at fixed distances from the objective and which represent the top and bottom limits of the brackets. The two planes, referenced 19 and 20, of separation of the zones are represented in bold and correspond to the thresholds for the variation of the diameter of the spots. It is noted that large surfaces, for example the wall on the left, may belong to several distinct zones. The processing of each zone allows correct matching of these surfaces.

Step 4 consists in creating the selection masks.

A selection mask is an image associated with a depth zone whose pixels have 5 possible states. This mask has two functions: one is to delimit the image parts on which the convolution enabling the generation of blur has to act, states 1, 2, 3, the other is to differentiate the sensitive regions for matching between the planes, states 2 and 3.

For each pixel belonging to the depth zone, the corresponding spot is copied into the mask image. The state associated with the pixel is defined as a function of the zone or zones to which the pixels of the spot belong. The five possible states for a pixel of the selection mask are as follows:

- State 0: the pixel is not affected by the processing of the zone. The point (pixel) does not belong to the zone but to a zone situated in front thereof.
- State 1: the pixel is affected by the processing of the zone. The pixel belongs to the zone and the spot generated overlaps only pixels of the zone.
- State 2: the pixel is affected by the processing of the zone. The pixel belongs to the zone and the spot generated overlaps pixels which do not all belong to the zone. The spot generated oversteps the depth zone.
- State 3: the pixel is affected by the processing of the zone since it is affected by spots of the zone. The pixel does not belong to the zone but to a zone situated to the rear thereof and the spot generated overlaps pixels belonging to the zone.
- State 4: the pixel belongs to a background. The pixel does not belong to the zone but to a zone situated to the rear thereof and the spot generated does not overlap pixels belonging to the zone.

The diameter of the spots associated with the pixels is the diameter calculated on the basis of the actual depth of the pixels concerned. It is however possible to take account of an average diameter calculated for a depth zone for example as a function of the average distance of the pixels relating to this zone.

The simple information regarding depth, possibly the average depth assigned to a zone, therefore makes it possible to obtain the states of the pixels or points of the masks.

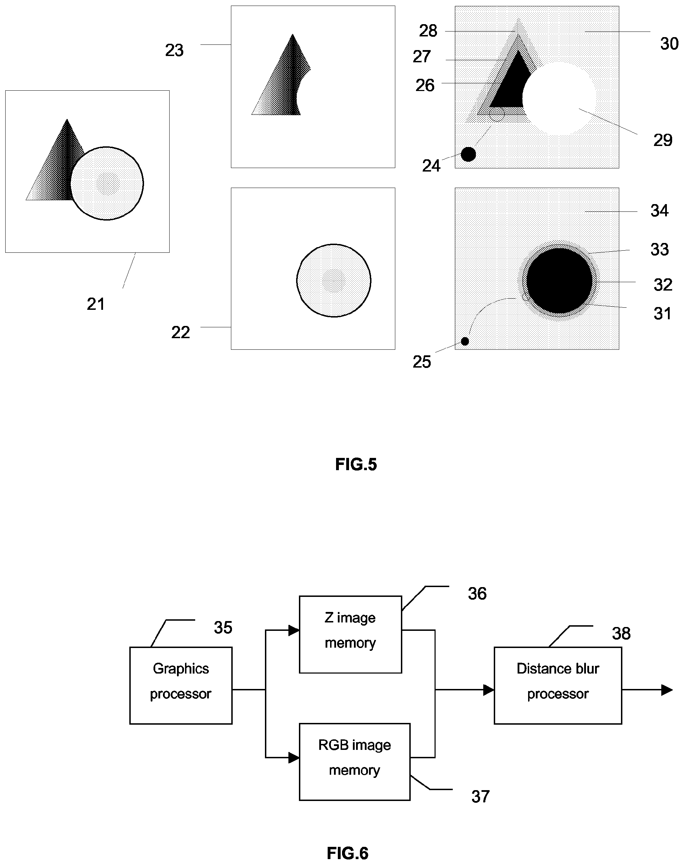

Figure 5 represents an example of constructing selection masks.

The backdrop is regarded as a zone situated in the background. The source image 21 or scene consists of a cone and a sphere in the foreground. This image is partitioned into two zones, a zone situated in front and comprising the sphere and a zone situated at the rear and comprising the cone. These two depth zones, in fact the pixels corresponding to the 3D points belonging to each of these zones, are represented respectively by the images referenced 22 and 23.

A selection mask is constructed for each of the zones. It consists in defining states for the pixels of each of these zones. The blur spot radii taken into account for the construction are those at the level of the processed contours and defined by the distance Z for the pixels of this contour. It is observed that the size of the spot 24 for the contour of the cone is greater than the size of the spot 25 for the contour of the sphere which is in the background.

Thus, 3 triangular regions cut out by the sphere are created for the cone, the regions 26, 27, 28 corresponding respectively to states 1, 2 and 3. The region 26 corresponds to the area delimited by a triangle interior to the initial triangle representing the cone, whose sides are at a distance of a spot radius away from those of the initial triangle, the region 27 corresponds to the area delimited by the initial triangle and the interior triangle, the region 28 corresponds to the area delimited by the initial triangle and an exterior triangle whose sides are at a distance of a spot radius away from those of the initial triangle. The sphere being a foreground zone, region 29, its pixels correspond to state 0. The backdrop, for the remaining part, region 30, corresponds to state 4.

Likewise, 3 concentric regions 31, 32, 33 corresponding respectively to states 1, 2 and 3 are created for the sphere. The region 31 corresponds to the area delimited by an interior circle concentric to the initial circle representing the sphere, whose radius is less, by a spot radius, than the radius of the initial circle, the region 32 corresponds to a ring defined by the initial circle and the interior circle, the region 33 corresponds to a ring defined by the initial circle and a concentric exterior circle whose radius is greater, by a spot radius, than the radius of the initial circle. The backdrop, region 34, for the remaining part, that is to say outside region 33, corresponds to state 4.

The points in state 1, 2 and 3 make it possible to delimit the region in which to apply the convolution. Moreover, the pixels in state 2 and 3 indicate the regions transparent to the backgrounds for the matching between zones. It will be observed that the sphere cuts the mask of the "cone" plane where it overlaps it, restoring the masking of the blur by the foregrounds.

The step referenced 5 consists of the generating of the blur and the combining of the 2D zones for their matching.

The application of the distance blur in a depth zone causes the weakening of the luminosity at the level of the contours of the corresponding 2D zone. Visually, everything occurs as if there were a fade between the blurred region of the perimeter of the 2D zone, which corresponds to states 2 and 3 of the mask, and which is in the background of this zone.

The more the focus is brought onto a depth zone, the smaller is the fade zone since the diameter of the spot is reduced and the better the depth zone is cut on its backdrop. When focused, the set of points having state 2 and 3 is null. There is no mixing with the backgrounds: the depth zone is cut perfectly on its backdrop.

This mode of matching of the depth zones utilizing these various states thus solves the effects of masking by foregrounds, where no blur is to be created.

For a given zone, the background information is necessary and has to have been calculated previously. The zones therefore have to be processed from the furthest away to the closest. It is observed that for the pixels of the mask in state 2, the background information is nonexistent. Hence, only part of the information desired to ensure correct transition between the zones is available.

The generation of blur is done by convolution. It consists in taking into account the immediate environment of a pixel in order to recalculate its value, for example a weighted averaging of the values of pixels located in the surface of the spot whose pixel to be recalculated is the centre. The convolution kernel or filtering window, which defines the weighting allocated to the values of the pixels, itself defined by the coefficients of the kernel, is for example a bell curve or a cylinder curve.

The convolution is performed differently depending on the state of the point of the mask associated with the point to be processed. Specifically, it involves utilizing the information available, according to the value of the points of the selection mask.

- If a point of the mask is in state 0, it belongs to a foreground. We go to the next pixel.
- If a point of the mask is in state 1, the convolution kernel is entirely contained in the depth zone, we are in the "interior" of this zone. With the aid of the distance information, the size of the convolution kernel is calculated, which is the size of the blur spot referred back to the image plane. The convolution is applied normally, by running through the zone points associated with the kernel. The result is copied into the final image.

- If a point of the mask is in state 2, the background information does not exist. All the pixels are fed back into the convolution provided that they belong to the current zone or to a previously processed zone. The result is copied into the final image. The pixels corresponding to state 2 are a source of artefacts since pixels belonging to previously processed zones, that is to say in the background, are fed into the convolution. Specifically, these pixels are processed as if they belonged to the current zone, with a kernel which therefore does not have the appropriate size, thereby causing geometrical discontinuities, for example on contours that are more spread out than they ought to be. In general, these errors are fairly imperceptible. They increase with the magnitude of the blur, that is to say of the surface area in state 2 or when there are considerable contrasts between depth zones.

- If a point of the mask is in state 3, we are in the "exterior" transition zone between the current depth zone and a background depth zone. The information of the background zone is available, it was calculated previously. Here the convolution is performed while taking into account, in the kernel, only the points contained in the current zone. The result is mixed with the final image. The proportions of the mixing are dependent on the kernel surface area contained in the current zone versus the active total surface area of the kernel. For the calculation of a point of zone 3, the result of the convolution relating to the current zone (the kernel takes into account only the pixels of the current zone) is for example added to the weighted intensity calculated for this point, this weighting consisting in multiplying the intensity calculated previously by the ratio of the surface area of the spot in the background zone to the total surface area of the spot.

The final image is thus constructed and stored in step 6, zone by zone, starting from the zone furthest away. The points of a zone are either copied (state 1, 2), or mixed (state 3) with the final image corresponding to the previous zone processed.

An exemplary device implementing the invention is represented in Figure 6.

The hardware embodiment may be effected with the aid of programmable signal processors and of image memories "pipelined" with the image synthesis graphics processors.

A central unit, not represented in the figure, transmits the data to a 3D engine referenced 35, a graphics processor, for the generation of a synthesis image. The data relating to the depth map or Z-buffer, for example coded on 24 bits, are transmitted to an image memory 36 which stores this depth map. The data relating to the synthesis image proper or source image, for example in the RGB format, 8 bits per colour, are transmitted to an RGB image memory referenced 37.

These stored data are transmitted to a distance blur processor 38. This processor also receives, from the central unit, parameters characterizing the depth in the scene, min distance and max distance, as well as the picture-taking system to be simulated, focal length, diaphragm. The output of the blur processor consists of an image with simulated distance blur.

The memories necessary for the processing are, in this example:

- 3 planes (RGB) for the source image.
- 3 planes for the distance image, Z being coded on 24 bits.
- 3 planes (RGB) for the final image.
- 1 plane (monochrome) for the mask.

The memories relating to the final image and to the mask are not detailed in the figure, they are integrated into the circuit 38 which is the distance blur processor.

The distance blur processor implements the method of generating blur described previously. It comprises means of calculation for defining 2D zones of the image corresponding to depth zones, the calculation of blur of a processed 2D zone being obtained by convolution for the pixels on either side of the boundary with another zone, the size of the convolution kernel being dependent on the depth of the pixels of the 2D zone processed.

## Claims

1. Computerized method of generating blur in a 2D image representing a 3D scene, on the basis of its associated distance image assigning a depth to the pixels of the image, **characterized in that** it comprises the following steps:

    - partitioning of the 2D image into 2D zones (2) as a function of the depths assigned to the pixels, by grouping neighbouring pixels which assigned depth belongs to a depth zone, the scene having been partitioned into predefined depth zones corresponding to depth ranges, a depth range being defined by a minimum and maximum depth,
    - calculation of blur around a 2D zone boundary, by convolution for the pixels of the 2D zone on either side of the boundary with a neighbouring other zone, the size of the convolution kernel (24, 25) being dependent on the depth of the pixels of the 2D zone processed and **in that** the 2D zones are processed sequentially from the furthest away (23) to the closest (22), the calculation of blur of a 2D current zone, for the 2D zone boundaries, being carried out only on the boundaries of this 2D zone with the 2D zone previously processed (26, 27, 28; 31, 32, 33), so as to provide an intermediate image (6), this intermediate image being that utilized for the convolution (5), during the processing of the next 2D zone (8).

2. Method according to Claim 1, **characterized in that** the convolution for a pixel at the 2D zone boundary belonging to the 2D current zone (27, 32) takes into account the pixels belonging to the 2D current zone (27, 32) and those belonging to the 2D previous zone (28, 33).

3. Method according to Claim 1, **characterized in that** the convolution for a pixel at the 2D zone boundary belonging to the previous 2D zone (28, 33) takes into account only the pixels belonging to the 2D current zone (27, 32).

4. Method according to Claim 1, **characterized in that**, for the calculation of blur, the value of a pixel in the previously processed 2D zone is obtained by adding the initial value of the pixel to the convolution result, in proportions corresponding to the surface area of the kernel in the previously processed 2D zone in relation to the overall surface area of the kernel.

5. Method according to Claim 1, **characterized in that** the 2D image is a synthesis image.

6. Method according to Claim 1, **characterized in that** the convolution kernel is a bell function.

7. Device for generating blur in a 2D image representing a 3D scene, according to the process of claim 1, **characterized in that** it comprises a graphics processor (35) for generating a synthesis image (37) and an associated depth map (36), a distance blur processor (38) comprising means of calculation for defining 2D zones of the image corresponding to depth zones, the scene having been partitioned into depth zones corresponding to predefined depth ranges, a depth range being defined by a minimum and maximum depth, the calculation of blur of a processed 2D zone being obtained by convolution for the pixels on either side of the boundary with another 2D zone, the size of the convolution kernel (24, 25) being dependent on the depth of the pixels of the 2D zone processed, the 2D zones being processed sequentially from the furthest away (23) to the closest (22), the calculation of blur of a 2D current zone, for the 2D zone boundaries, being carried out only on the boundaries of this 2D zone with the 2D zone previously processed (26, 27, 28; 31, 32, 33), so as to provide an intermediate image (6), this intermediate image being that utilized for the convolution (5), during the processing of the next 2D zone (8).

**Patentansprüche**

1. Computergestütztes Verfahren zum Erzeugen von Unschärfe in einem 2D-Bild, das eine 3D-Szene repräsentiert, auf der Grundlage seines zugeordneten Entfernungsbilds, das den Pixeln des Bilds eine Tiefe zuweist, **dadurch gekennzeichnet, dass** das Verfahren die folgenden Schritte umfasst:

- Aufteilen des 2D-Bilds in 2D-Zonen (2) in Abhängigkeit von den den Pixeln zugewiesenen Tiefen durch Gruppieren von benachbarten Pixeln, deren zugewiesene Tiefe zu einer Tiefenzone gehört, wobei die Szene in vordefinierte Tiefenzonen, die Tiefenbereichen entsprechen, aufgeteilt worden ist, wobei ein Tiefenbereich durch eine minimale und eine maximale Tiefe definiert ist,
- Berechnen der Unschärfe um eine 2D-Zonen-Begrenzung durch Faltung für die Pixel der 2D-Zone auf beiden Seiten der Begrenzung mit einer benachbarten weiteren Zone, wobei die Größe des Faltungskerns (24, 25) von der Tiefe der Pixel der 2D-Zone, die verarbeitet wird, abhängt und wobei die 2D-Zonen von der am weitesten entfernten (23) zu der nächsten (22) aufeinanderfolgend verarbeitet werden, wobei die Berechnung der Unschärfe einer gegenwärtigen 2D-Zone für die 2D-Zonen-Begrenzungen nur an den Begrenzungen dieser 2D-Zone mit der zuvor verarbeiteten 2D-Zone (26, 27, 28; 31, 32, 33) ausgeführt wird, um ein Zwischenbild (6) bereitzustellen, wobei dieses Zwischenbild dasjenige ist, das während der Verarbeitung der nächsten 2D-Zone für die Faltung (5) genutzt wird (8).

2. Verfahren nach Anspruch 1, **dadurch gekennzeichnet, dass** die Faltung für ein Pixel bei der 2D-Zonen-Begrenzung, die zu der gegenwärtigen 2D-Zone gehört (27, 32), diejenigen Pixel, die zu der gegenwärtigen 2D-Zone (27, 32) gehören, und diejenigen, die zu der vorhergehenden 2D-Zone (28, 33) gehören, berücksichtigt.

3. Verfahren nach Anspruch 1, **dadurch gekennzeichnet, dass** die Faltung für ein Pixel bei der 2D-Zonen-Begrenzung, die zu der vorhergehenden 2D-Zone (28, 33) gehört, nur diejenigen Pixel, die zu der gegenwärtigen 2D-Zone (27, 32) gehören, berücksichtigt.

**4.** Verfahren nach Anspruch 1, **dadurch gekennzeichnet, dass** der Wert eines Pixels in der zuvor verarbeiteten 2D-Zone für die Berechnung der Unschärfe durch Addieren des Anfangswerts des Pixels zu dem Faltungsergebnis in Anteilen, die dem Flächeninhalt des Kerns in der zuvor verarbeiteten 2D-Zone in Bezug zu dem Gesamtflächeninhalt des Kerns entsprechen, erhalten wird.

**5.** Verfahren nach Anspruch 1, **dadurch gekennzeichnet, dass** das 2D-Bild ein Synthesebild ist.

**6.** Verfahren nach Anspruch 1, **dadurch gekennzeichnet, dass** der Faltungskern eine Glockenfunktion ist.

**7.** Vorrichtung zum Erzeugen von Unschärfe in einem 2D-Bild, das eine 3D-Szene repräsentiert, nach dem Verfahren von Anspruch 1, **dadurch gekennzeichnet, dass** die Vorrichtung einen Grafikprozessor (35) zum Erzeugen eines Synthesebilds (37) und einer zugeordneten Tiefenkarte (36), einen Entfernungsunschärfeprozessor (38), der Mittel zum Berechnen zum Definieren von 2D-Zonen des Bilds, die Tiefenzonen entsprechen, umfasst, umfasst, wobei die Szene in Tiefenzonen aufgeteilt worden ist, die vordefinierten Tiefenbereichen entsprechen, wobei ein Tiefenbereich durch eine minimale und eine maximale Tiefe definiert ist, wobei die Berechnung der Unschärfe einer verarbeiteten 2D-Zone durch Faltung für die Pixel auf beiden Seiten der Begrenzung mit einer anderen 2D-Zone erhalten wird, wobei die Größe des Faltungskerns (24, 25) von der Tiefe der Pixel der 2D-Zone, die verarbeitet wird, abhängt, wobei die 2D-Zonen von der am weitesten entfernten (23) zu der nächsten (22) aufeinanderfolgend verarbeitet werden, wobei die Berechnung der Unschärfe einer gegenwärtigen 2D-Zone für die 2D-Zonen-Begrenzungen nur an den Begrenzungen dieser 2D-Zone mit der zuvor verarbeiteten 2D-Zone (26, 27, 28; 31, 32, 33) ausgeführt wird, um ein Zwischenbild (6) bereitzustellen, wobei dieses Zwischenbild dasjenige ist, das während der Verarbeitung der nächsten 2D-Zone (8) für die Faltung (5) genutzt wird.

## Revendications

**1.** Procédé informatisé de génération de flou dans une image 2D représentant une scène 3D, sur la base de son image de distance associée attribuant une profondeur aux pixels de l'image, **caractérisé en ce qu'**il comprend les étapes suivantes :

- partitionnement de l'image 2D en zones 2D (2) en fonction des profondeurs attribuées aux pixels, en regroupant des pixels voisins dont la profondeur attribuée appartient à une zone de profondeur, la scène ayant été partitionnée en zones de profondeur prédéfinies correspondant à des plages de profondeur, une plage de profondeur étant définie par une profondeur minimale et maximale,
- calcul de flou autour d'une limite de zone 2D par convolution pour les pixels de la zone 2D de chaque côté de la limite avec une autre zone voisine, la taille du noyau de convolution (24, 25) dépendant de la profondeur des pixels de la zone 2D traitée et **en ce que** les zones 2D sont traitées de façon séquentielle de la plus éloignée (23) à la plus proche (22), le calcul de flou d'une zone 2D courante, pour les limites de zone 2D, étant effectué uniquement sur les limites de cette zone 2D avec la zone 2D précédemment traitée (26, 27, 28; 31, 32, 33), de sorte à fournir une image intermédiaire (6), cette image intermédiaire étant celle utilisée pour la convolution (5), pendant le traitement de la zone 2D suivante (8).

**2.** Procédé selon la revendication 1, **caractérisé en ce que** la convolution pour un pixel au niveau de la limite de zone 2D appartenant à la zone 2D courante (27, 32) prend en compte les pixels appartenant à la zone 2D courante (27, 32) et ceux appartenant à la zone 2D précédente (28, 33).

**3.** Procédé selon la revendication 1, **caractérisé en ce que** la convolution pour un pixel au niveau de la limite de zone 2D appartenant à la zone 2D précédente (28, 33) prend en compte uniquement les pixels appartenant à la zone 2D courante (27, 32).

**4.** Procédé selon la revendication 1, **caractérisé en ce que**, pour le calcul de flou, la valeur d'un pixel de la zone 2D traitée précédemment est obtenue en ajoutant la valeur initiale du pixel au résultat de convolution, dans des proportions correspondant à la surface du noyau dans la zone 2D traitée précédemment par rapport à la surface globale du noyau.

**5.** Procédé selon la revendication 1, **caractérisé en ce que** l'image 2D est une image de synthèse.

**6.** Procédé selon la revendication 1, **caractérisé en ce que** le noyau de convolution est une fonction représentée par une courbe en cloche.

**7.** Dispositif de génération de flou dans une image 2D représentant une scène 3D selon le processus de la revendication 1, **caractérisé en ce qu'**il comprend un processeur graphique (35) pour générer une image de synthèse (37) et une carte de profondeur associée (36), un processeur de flou de distance (38) comprenant un moyen de calcul pour définir des zones 2D de l'image correspondant à des zones de profondeur, la scène ayant été partitionnée en zones de profondeur correspondant à des plages de profondeur prédéfinies, une plage de profondeur étant définie par une profondeur minimale et maximale, le calcul de flou d'une zone 2D traitée étant obtenu par convolution pour les pixels des deux côtés de la limite avec une autre zone 2D, la taille du noyau de convolution (24, 25) dépendant de la profondeur des pixels de la zone 2D traitée, les zones 2D étant traitées de façon séquentielle de la plus éloignée (23) à la plus proche (22), le calcul de flou d'une zone 2D courante, pour les limites de zone 2D, étant effectué uniquement sur les limites de cette zone 2D avec la zone 2D traitée précédemment (26, 27, 28 ; 31, 32, 33), afin de fournir une image intermédiaire (6), cette image intermédiaire étant celle utilisée pour la convolution (5), pendant le traitement de la zone 2D suivante (8).

FIG.1

FIG.2

**FIG.3**

**FIG.4**

23

21

28
27
26

30

29

24

25

31
32
33
34

22

**FIG.5**

35 Graphics processor

36 Z image memory

38 Distance blur processor

37 RGB image memory

**FIG.6**

**EP 1 494 174 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 2325131 A, Graham Alexander Thomas